Europäisches Patentamt

(19) European Patent Office  (11) Publication number: **0 223 298**
**B1**
Office européen des brevets

(12) EUROPEAN PATENT SPECIFICATION

(45) Date of publication of the patent specification:  (51) Int. Cl.⁴: **F16L 3/14, H02G 3/26**
08.02.89

(21) Application number: **86201965.0**

(22) Date of filing: **10.11.86**

(54) **Drop hanger.**

(30) Priority: **18.11.85 NL 8503179**  (73) Proprietor: **FLAMCO B.V., Industriestraat 6, NL-2802 AC Gouda(NL)**

(43) Date of publication of application:
**27.05.87 Bulletin 87/22**  (72) Inventor: **Snel, Frederik, 10, Spechtstraat, NL-2851 VL Haastrecht(NL)**

(45) Publication of the grant of the patent:
**08.02.89 Bulletin 89/6**  (74) Representative: **van der Veken, Johannes Adriaan et al, EXTERPATENT B.V. P.O. Box 90649, NL-2509 LP 's-Gravenhage(NL)**

(84) Designated Contracting States:
**AT BE CH DE ES FR GB IT LI LU NL SE**

(56) References cited:
**CH-A- 614 511**
**DE-A- 2 309 664**
**FR-A- 2 439 928**
**NL-A- 8 001 866**
**US-A- 3 171 624**
**US-A- 4 166 600**

## Description

The invention relates to a drop hanger for a pipe or similar prismatic object, comprising an essentially U-shaped bearing element whose end parts mate with a fastening element which can be fastened to a threaded rod hanging down from a ceiling.

Such drop hangers are known.

In a known drop hanger (NL-A 8 001 866) the bearing element consists of a U-shaped and somewhat elastic strip with ends deformed inwardly, and situated between these ends a fastening element with a narrowed central part into which the ends of the strip fit, and which is provided with an internal screw thread into which the threaded rod fits, and a mounting ring or sleeve for fixing the outward springing strip end around the fastening element and in the narrow part thereof.

This known drop hanger has the disadvantage that the parts are relatively expensive. For example, the fastening element is a turned product, and the mounting or sleeve must be specially made. Moreover, fitting of the drop hanger is rather difficult.

The object of the invention is to produce a drop hanger of relatively cheap – and preferably standard – parts which is simple to fit.

This object is achieved according to the invention by a drop hanger of the type mentioned in the preamble, which is characterized in that the U-shaped bearing element is made of stiff wire, and the end parts of the bearing element are bent inwards, the fastening element is designed as a yoke with an essentially U-shaped cross section, the bottom of the U-shaped yoke being partially removed to allow through the threaded rod and the bent end parts of the bearing element, and in the mounted state the bent end parts of the bearing element are situated between the legs of the yoke which face away from the bearing element, and said parts are confined in the lengthwise direction of the threaded rod between retaining elements which are disposed at the top and bottom side of the yoke on the threaded rod projecting through the yoke.

Such a drop hanger consists of a minimum number of parts, which can be made, on the one hand, in a simple manner by means of cutting and bending operations from relatively cheap material or, on the other hand, can be standard parts. The mounting of this hanger can also take place in a very simple manner, by insertion into and fixing of the end parts of the bearing element in the yoke, while at the same time fastening to the threaded rod takes place.

The bearing element ist elastic, and each leg of the bearing element is provided with a recess near the bent end parts at the side facing away from the other leg, while the distance between the bottoms of the recesses when the bearing element is not mounted is greater than the distance between the edge parts of the removed bottom part of the yoke which are situated opposite each other in the lengthwise direction of the yoke, said edge parts in the mounted state of the bearing element falling into the recesses, as a result of which it is possible to supply the bearing element and the yoke combined as a sub-assembly, so that during mounting no parts need to be put together.

The end parts of the bearing element are expediently bent inwards in a U shape, the height of this U essentially corresponding to the height of the yoke, and the recesses are disposed at the level of the free ends of the bent U-shaped end parts of the bearing element. This facilitates the mounting of the bearing element in the yoke, thanks to the presence of a rounded part serving as a locating edge on the ends of the bearing element, and the bearing element is very well retained in the yoke in the mounted state of the drop hanger.

In a practical embodiment the internal distance between the legs of the yoke at the point of the passage for the end parts of the bearing element is essentially the same or a little greater than the wire thickness of the bearing element, and at the point of passage for the threaded rod this distance is such that the threaded rod fits with clearance between the legs of the yoke, while one of the legs of the yoke at the point of passage of the threaded rod can be provided on the inside with a projection or lobe which is low in height and can mate with the threads of screw of the threaded rod, so that during the mounting the yoke can remain hanging on the threaded rod.

In one of the legs of the yoke, at the side of the bottom, provision can also be made for recesses to allow through the bent end parts of the bearing element from the side of the yoke.

The invention will now be explained with reference to an embodiment shown in the drawing, in which:

Fig. 1 shows in perspective a preferred embodiment of the drop hanger according to the invention;

Fig. 2 shows a side view, partially in cross section, of the drop hanger of Fig. 1, with a pipe placed therein;

Fig. 3 shows a detail III of Fig. 2, on an enlarged scale;

Fig. 4 is a top view of the yoke of the drop hanger along the line IV-IV in Fig. 2.

Fig. 5 is a cross section on an enlarged scale of part of one of the legs of the yoke along the line V-V in Fig. 4; and

Fig. 6 shows how the mounting of the drop hanger of Fig. 1 can take place.

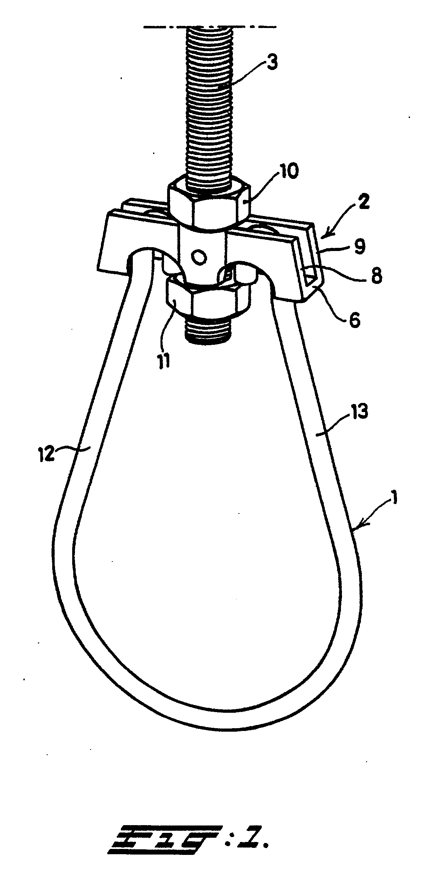

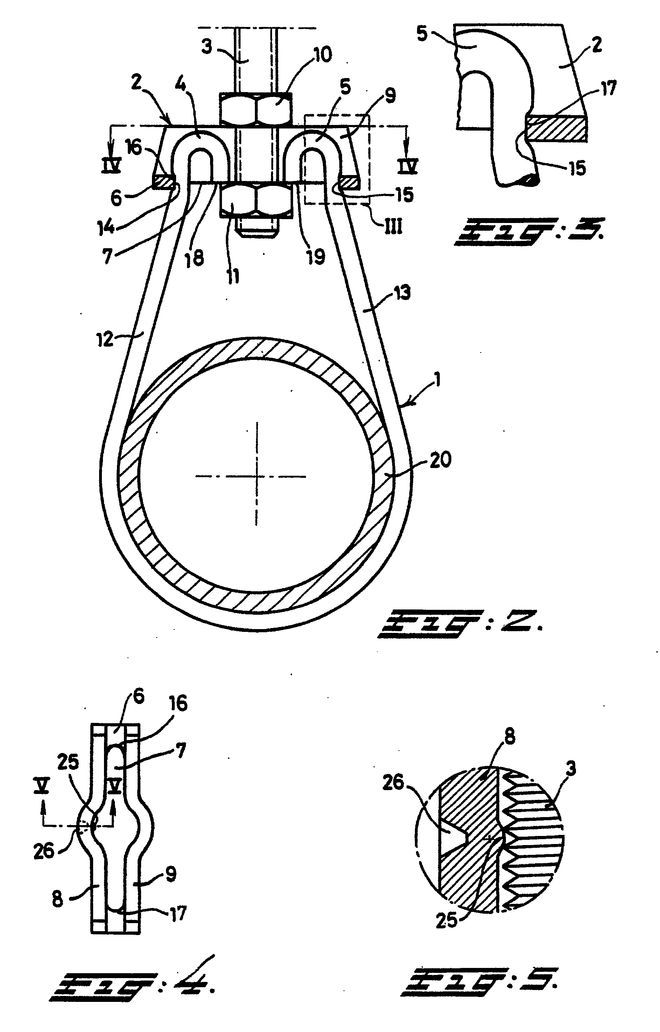

The preferred embodiment of a drop hanger according to the invention shown in Figs. 1 and 2 consists of an essentially U-shaped bearing element 1 and a fastening element 2 mating with the end parts of this bearing element. This fastening element can be fastened to a threaded rod 3 hanging down from a ceiling.

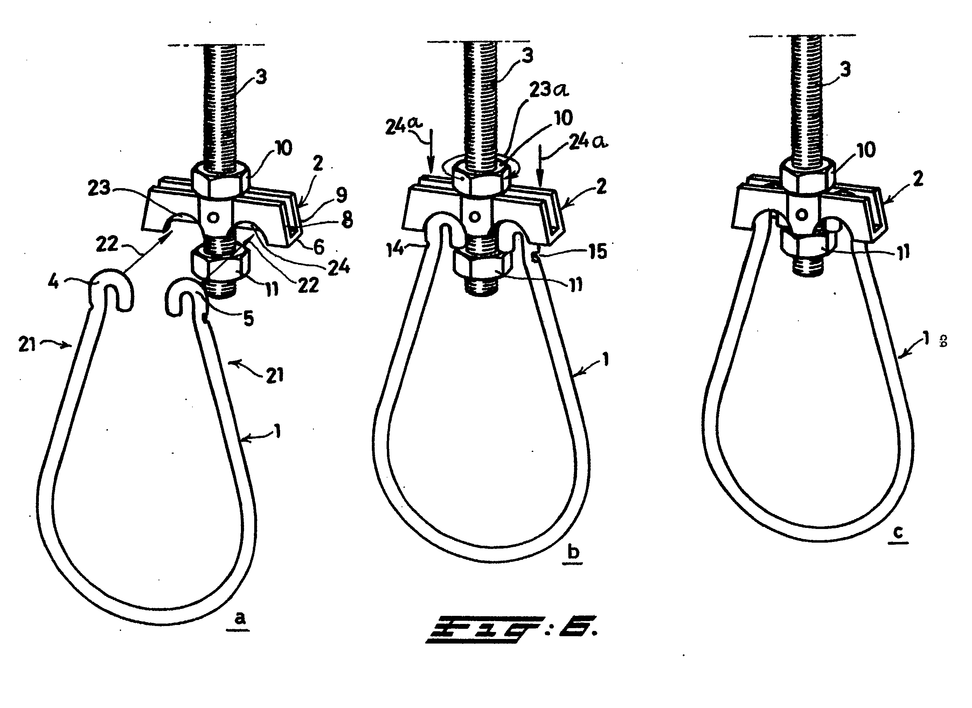

The U-shaped bearing element 1 is made from stiff wire. The end parts 4, 5 of the bearing element 1 are bent inwards in the shape of a U. The fastening element 2 is designed as a yoke with an essentially U-shaped cross section. The bottom 6 of the yoke 2 is partially removed. The resulting slit 7 (see also Fig. 4) serves to let through the threaded rod 3 and the end parts 4, 5 of the bearing element 1. The internal distance between the two upright legs 8, 9 of the yoke 2 is adapted to the thickness of the wire from which the bearing element 1 is made or to the diameter of the threaded rod 3.

In the mounted state the bent U-shaped end parts 4, 5 of the bearing element 1 project through the slit 7 into the bottom of the yoke and are situated between the two legs thereof. The two end parts 4, 5 are confined in the lengthwise direction of the threaded rod 3 between two nuts 10 and 11, which are disposed on the top and bottom side of the yoke 2 on the threaded rod 3.

Each leg 12 and 13 of the bearing element is provided, near the bent end parts 4 and 5, on the side facing away from the other leg, with a recess 14 and 15 respectively. In the unmounted state of the bearing element 1 the distance between the bottoms of the recesses 14, 15 is greater than the distance between the edge parts 16, 17 – lying opposite each other in the lengthwise direction of the yoke 2 – of the slit 7 in the bottom 6 of the yoke. The bearing element 1 is slightly elastic, and in the mounted state of the bearing element the said edge parts 16 and 17 fall into the recesses 14 and 15. This makes it possible to supply the bearing element 1 and the yoke 2 combined as a sub-assembly, so that for the mounting no parts need to be assembled.

The length of the bent end parts 4 and 5 is such that the height of the U essentially corresponds to the height of the yoke 2. The recesses 14 and 15 are also disposed at the level of the free ends 18 and 19 of the U. The end parts 4 and 5 are therefore very well retained in the yoke when the bearing element 1 is mounted, so that a pipe 20 lying in the bearing element 1 can be suspended very reliably from the ceiling by means of the drop hanger.

Fig. 6 shows how the drop hanger can be mounted. The two nuts 10 and 11 and the yoke 2 are first of all fitted on the threaded rod, with the distance between the two nuts 10 and 11 being kept greater than the height of the yoke (see Fig. 6a). The bearing element 1 is then fitted by pressing the two legs of the bearing element towards each other in the direction of the arrows 21 and placing the bearing element in the direction of the arrows 22 between the yoke and the nut 11. In order to facilitate this placing, provision is made in the leg 8 of the yoke, on the side of the bottom 6, for recesses 23 and 24, the shape of which is adapted to the shape of the bent end parts 4 and 5 of the bearing element 1. After the fitting of the bearing element 1, the situation is as shown in Fig. 6b.

The nut 10 is then tightened (arrow 23a), causing the yoke 2 to be pressed downwards (arrows 24a). At a particular point the yoke 2 comes to rest against the nut 11, while at the same time the edge parts 16 and 17 of the slit 7 in the bottom of the yoke fall into the recesses 14 and 15 of the bearing element.

The bent end parts of the bearing element are then confined in the yoke between the side walls and the nuts 10 and 11, and the bearing element can then no longer be removed from the yoke (Fig. 6).

During the above-described mounting, the pipe to be suspended can lie in the bearing element 1.

During the mounting of the drop hanger, the bearing element can also be placed in such a way that the edge parts 16 and 17 of the slit in the bottom of the yoke fall directly into the recesses 14 and 15, following which the whole unit can be fixed by tightening screw 10 or screw 11.

In order to prevent the yoke from slipping downwards during mounting of the yoke 2 on the threaded rod 3, one of the legs 8, 9 of the yoke 2 can be provided on the inside, at the point of passage of the threaded rod 3, with a projection or lobe 25 which is low in height and can mate with the threads of the threaded rod 3. Such a lobe can be fitted by pressing the upright leg of the yoke at the lobe from the other side at 26.

The above-described drop hanger has the advantage that it can be made from relatively cheap parts, which can either be manufactured with simple cutting and bending operations, or can be standard parts. Moreover, the mounting of the drop hanger is very simple.

It will be clear that the drop hanger according to the invention is not limited to the embodiment described and shown in the drawings. For example, the bearing element can be made from wire with a square or polygonal cross section instead of wire with a round cross section. Although it is preferable to make the yoke of bent sheet material, this is not necessary for good functioning of the drop hanger. Finally, instead of the nuts 10 and 11, other retaining means can be provided on the threaded rod.

## Claims

1. Drop hanger for a pipe or similar prismatic object, comprising an essentially U-shaped bearing element (1) whose end parts (4,5) mate with a fastening element (2) which can be fastened to a threaded rod (3) hanging down from the ceiling, characterized in that the U-shaped bearing element (1) is made of stiff wire, and the end parts (4, 5) of the bearing element (1) are bent inwards, the fastening element is designed as a yoke (2) with an essentially U-shaped cross section, the bottom (6) of the U-shaped yoke (2) being partially removed to allow through the threaded rod (3) and the bent end parts (4, 5) of the bearing element (1), and in the mounted state the bent end parts (4, 5) of the bearing element (1) are situated between the legs (8, 9) of the yoke (2) which face away from the bearing element (1), and said parts are confined in the lengthwise direction of the threaded rod (3) between retaining elements (10, 11) which are disposed at the top and bottom side of the yoke (2) on the threaded rod (3) projecting through the yoke.

2. Drop hanger according to Claim 1, characterized in that the bearing element (1) is elastic, and each leg (12, 13) of the bearing element is provided, near the bent end parts (4, 5) at the side facing away from the other leg, with a recess (14, 15), while the distance between the bottoms of the recesses (14, 15) when the bearing element (1) is not mounted is greater than the distance between the edge parts (16, 17) of the removed bottom part (7) of the yoke (2), said edge parts (16, 17) in the mounted state of the bearing element (1) falling into the recesses (14, 15).

3. Drop hanger according to Claim 1 or 2, characterized in that the end parts (4, 5) of the bearing element (1) are bent inwards in a U shape, while the height of this U essentially corresponds to the height of the yoke (2).

4. Drop hanger according to Claim 2 or 3, characterized in that the recesses (14, 15) are disposed at the level of the free end (18, 19) of the bent U-shaped end parts (4, 5) of the bearing element (1).

5. Drop hanger according to one of Claims 1–4, characterized in that the internal distance between the legs (8, 9) of the yoke (2) at the point of the passage for the end parts (4, 5) of the bearing element (1) is essentially the same as or a little greater than the wire thickness of the bearing element, and at the point of passage for the threaded rod (3) this distance is such that the threaded rod (3) fits with clearance between the legs (8, 9) of the yoke (2).

6. Drop hanger according to Claim 5, characterized in that one of the legs (8, 9) of the yoke (2) at the point of passage of the threaded rod (3) is provided on the inside with a projection or lobe (25) which is low in height and can mate with the threads of screw of the threaded rod (3).

7. Drop hanger according to one of Claims 1–6, characterized in that in one of the legs (8, 9) of the yoke (2) at the side of the bottom (6) provision is made for recesses (23, 24) to allow through the bent end parts (4, 5) of the bearing element (1) from the side of the yoke.

## Patentansprüche

1. Aufhängungsvorrichtung für ein Rohr oder einen entsprechenden prismatischen Gegenstand, mit einem im wesentlichen U-förmigen Halteelement (1), dessen Endbereiche (4,5) in ein Befestigungselement (2) eingreifen, welches an einem Gewindebolzen (3) befestigt werden kann, der von der Decke herunterragt, dadurch gekennzeichnet, daß das U-förmige Halteelement (1) aus einem steifen Draht gefertigt ist und die Endbereiche (4, 5) des Halteelementes (1) nach einwärts gebogen sind, daß das Befestigungselement als ein Jochteil (2) im wesentlichen U-förmigen Querschnittes ausgebildet ist, wobei der Boden (6) des U-förmigen Jochteiles (2) teilweise entfernt ist, um den Gewindebolzen (3) und die einwärts gebogenen Endbereiche (4, 5) des Halteelementes (1) durchtreten zu lassen, wobei im montierten Zustand die umgebogenen Endbereiche (4, 5) des Halteelementes (1) zwischen den Schenkeln (8, 9) des Jochteiles (2) gelegen sind, welche von dem Halteelement (1) wegweisen, und daß die genannten Teile in Längsrichtung des Gewindebolzens (3) zwischen Einspannelementen (10, 11) gelegen sind, welche sich auf der Oberseite und der Unterseite des Jochteiles (2) auf dem durch das Jochteil hindurch reichenden Gewindebolzen (3) befinden.

2. Aufhängungsvorrichtung nach Anspruch 1, dadurch gekennzeichnet, daß das Halteelement (1) elastisch ist und jeder Schenkel (12, 13) des Halteelementes nahe den umgebogenen Endbereichen (4, 5) auf der Seite, welche von dem jeweils anderen Schenkel abliegt, mit einer Ausnehmung (14, 15) versehen ist, wobei der Abstand zwischen dem jeweiligen Grund der Ausnehmungen (14, 15) bei nicht eingebautem Zustand des Halteelementes (1) größer als der Abstand zwischen den Rändern (16, 17) des entfernten Bodenbereiches (7) des Jochteiles (2) ist, und die Ränder (16, 17) im eingebauten Zustand des Halteelementes (1) mit den ganannten Ausnehmungen (14, 15) in Eingriff kommen.

3. Aufhängungsvorrichtung nach Anspruch 1 oder 2, dadurch gekennzeichnet, daß die umgebogenen Endbereiche (4, 5) des Halteelementes (1) zu einer U-Form nach einwärts gebogen sind und die Höhe dieser U-förmig einwärts gebogenen Bereiche im wesentlichen mit der Höhe des Jochteiles (2) übereinstimmt.

4. Aufhängungsvorrichtung nach Anspruch 2 oder 3, dadurch gekennzeichnet, daß die Ausnehmungen (14, 15) auf dem Niveau der freien Enden (18, 19) der U-förmig einwärts gebogenen Endbereiche (4, 5) des Halteelementes (1) gelegen sind.

5. Aufhängungsvorrichtung nach einem der Ansprüche 1 bis 4, dadurch gekennzeichnet, daß der lichte Abstand zwischen den Schenkeln (8, 9) des Jochteiles (2) am Punkte des Durchganges für die umgebogenen Endbereiche (4, 5) des Halteelementes (1) im wesentlichen gleich oder etwas größer als die Drahtdicke des Halteelementes ist und am Punkte des Durchganges für den Gewindebolzen (3) derart bemessen ist, daß der Gewindebolzen (3) mit Spiel zwischen den Schenkeln (8, 9) des Jochteiles (2) hindurchtritt.

6. Aufhängungsvorrichtung nach Anspruch 5, dadurch gekennzeichnet, daß einer der Schenkel (8, 9) des Jochteiles (2) an dem Punkt des Durchtrittes des Gewindebolzens (3) auf der Innenseite mit einem Vorsprung oder einer Einbeulung (25) versehen ist, welche geringe Höhe hat und mit den Gewindegängen des Gewindes des Gewindebolzens (3) in Eingriff kommen kann.

7. Aufhängungsvorrichtung nach einem der Ansprüche 1 bis 6, dadurch gekennzeichnet, daß einer der Schenkel (8, 9) des Jochteiles (2) auf der Seite des Bodens (6) mit Ausnehmungen (23, 24) versehen ist, welche ein Einsetzen der umbebogenen Endbereiche (4, 5) des Halteelementes (1) von der Seite her in das Jochteil gestatten.

## Revendications

1. Collier de suspension pour un tuyau ou un objet prismatique similaire, comprenant un élément porteur (1) sensiblement en forme de U dont les parties d'extrémité (4, 5) s'accouplent avec un élément de fixation (2) qui peut être fixé à une tige filetée (3) pendant du plafond, caractérisé en ce que l'élément porteur en forme de U (1) est fabriqué en fil rigide et les parties d'extrémité (4, 5) de l'élément porteur (1) sont pliées vers l'intérieur, l'élément de fixation est sous la forme d'une chape (2) à section transversale sensiblement en U, la base (6) de la chape en U (2) étant partiellement enlevée pour permettre le passage de la tige filetée (3) et des parties d'extrémité pliées (4, 5) de l'élément porteur (1), et, à létat assemblé, les parties d'extrémité pliées (4, 5) de l'élément porteur (1) sont situées entre les ailes (8, 9) de la chape (2), qui sont tournées à l'opposé de l'élément porteur (1), et lesdites parties sont retenues dans la direction longitudinale de la tige filetée (3) entre des éléments de retenue (10, 11) qui sont disposés au-dessus et au-dessous de la chape (2) sur la tige filetée (3) traversant la chape.

2. Collier de suspension suivant la revendication 1, caractérisé en ce que l'élément porteur (1) est élastique et chaque branche (12, 13) de l'élément porteur présente, près des parties d'extrémité pliées (4, 5) et du côté tourné à l'opposé de l'autre branche, un creux (14, 15), la distance entre les fonds des creux (14, 15) lorsque l'élément porteur (1) n'est pas monté étant plus grande que la distance entre les bords (16, 17) de la partie enlevée (7) de la base de la chape (2), lesdits bords (16, 17) tombant dans les creux (14, 15) à l'état assemblé de l'élément porteur (1).

3. Collier de suspension suivant la revendication 1 ou 2, caractérisé en ce que les parties d'extrémité (4, 5) de l'élément porteur (1) sont repliées vers l'intérieur en forme de U, la hauteur de ce U correspondant sensiblement à la hauteur de la chape (2).

4. Collier de suspension suivant la revendication 2 ou 3, caractérisé en ce que les creux (14, 15) sont disposés au niveau de l'extrémité libre (18, 19) des parties d'extrémité repliées en U (4, 5) de l'élément porteur (1).

5. Collier de suspension suivant l'une des revendications 1 à 4, caractérisé en ce que la distance intérieure entre les ailes (8, 9) de la chape (2) au point de passage des parties d'extrémité (4, 5) de l'élément porteur (1) est sensiblement égale ou un peu supérieure à l'épaisseur du fil de l'élément porteur et, au point de passage de la tige filetée (3), cette distance est telle que la tige filetée (3) se loge avec jeu entre les ailes (8, 9) de la chape (2).

6. Collier de suspension suivant la revendication 5, caractérisé en ce qu'une des ailes (8, 9) de la chape (2) au point de passage de la tige filetée (3) comporte, sur la face intérieure, une saillie ou un lobe (25) qui est de faible hauteur et peut s'engager dans le filetage de la tige filetée (3).

7. Collier de suspension suivant l'une des revendications 1 à 6, caractérisé en ce que, dans l'une des ailes (8, 9) de la chape (2), sur le côté de la base (6), il est prévu des évidements (23, 24) pour permettre le passage des parties d'extrémité pliées (4, 5) de l'élément porteur (1) à partir du côté de la chape

FIG :1.

_FIG : 3._

_FIG : 2._

_FIG : 4._

_FIG : 5._

Fig. 6.